# EUROPÄISCHE PATENTSCHRIFT

(11) **EP 1 313 545 B1**
(45) Veröffentlichungstag und Bekanntmachung des Hinweises auf die Patenterteilung: **07.04.2004**
(21) Anmeldenummer: 01969228.4
(22) Anmeldetag: 07.08.2001
(51) Int. Cl.: B01D 53/90, F01N 3/20

(54) **VORRICHTUNG ZUR ERZEUGUNG EINES REDUKTIONSMITTEL-LUFT-GEMISCHES**
DEVICE FOR PRODUCING A REDUCTANT-AIR MIXTURE
DISPOSITIF DE PRODUCTION D'UN MELANGE REDUCTEUR-AIR

(30) Priorität: 18.08.2000 DE 10040571
(43) Veröffentlichungstag der Anmeldung: 28.05.2003
(73) Patentinhaber: ROBERT BOSCH GMBH, 70442 Stuttgart (DE)
(72) Erfinder: MAYER, Hanspeter, A-5421 Adnet (AT)
(86) Internationale Anmeldenummer: PCT/DE2001/003022
(87) Internationale Veröffentlichungsnummer: WO 2002/013951

(56) Entgegenhaltungen:
- EP-A- 0 849 443
- DE-A- 3 411 537
- DE-A- 19 750 138
- DE-A- 19 946 902
- DE-C- 19 806 265

## Beschreibung

### Stand der Technik

Die Erfindung geht aus von einer Vorrichtung zur Erzeugung eines Reduktionsmittel-Luft-Gemisches nach der Gattung des Anspruchs 1.

Eine solche Vorrichtung ist aus der Literatur, Dieselmotor-Management, Vieweg Verlag, 2.Auflage 1998, Seite 31, bekannt. Diese Vorrichtung ist Teil eines Systems zur Nachbehandlung von Abgasen von Brennkraftmaschinen, insbesondere selbstzündenden Brennkraftmaschinen. Durch die Zugabe eines Reduktionsmittels zum Abgas kann die Wirksamkeit eines Reduktionskatalysators zur Verringerung von Stickoxiden im Abgas verbessert werden. Die Vorrichtung weist einen Mischraum auf, in welchen Reduktionsmittel über eine durch ein Dosierventil gesteuerte Reduktionsmittelzuführverbindung und Luft über eine Luftzuführverbindung einbringbar ist. Derartige Vorrichtungen weisen oftmals einen aufwendigen Aufbau mit vielen Bauteilen und großer Baugröße auf. Das Dosierventil ist dabei als getrennte Baueinheit ausgeführt, die mit der Vorrichtung verbunden ist. Hierdurch ergibt sich ebenfalls eine große Baugröße und ein großes Totvolumen der Vorrichtung, das mit dem Reduktionsmittel gefüllt ist.

### Vorteile der Erfindung

Die erfindungsgemäße Vorrichtung mit den Merkmalen gemäß Anspruch 1 hat demgegenüber den Vorteil, daß diese einen einfachen Aufbau und eine geringe Baugröße aufweist. Der Mischraumkörper und das Dosierventil sind dabei nicht als funktional getrennte Baueinheiten miteinander verbunden sondern wirken funktional zusammen.

In den abhängigen Ansprüchen sind vorteilhafte Ausgestaltungen und Weiterbildungen der erfindungsgemäßen Vorrichtung angegeben. Die Ausbildung gemäß Anspruch 4 ermöglicht auf einfache Weise eine Verteilung der in den Mischraum eintretenden Luft und damit eine wirkungsvolle Zerstäubung des Reduktionsmittels und Erzeugung des Reduktionsmittel-Luft-Gemisches. Durch die Ausbildung gemäß Anspruch 6 wird die Verteilung der Luft und damit die Erzeugung des Reduktionsmittel-Luft-Gemisches weiter verbessert.

### Zeichnung

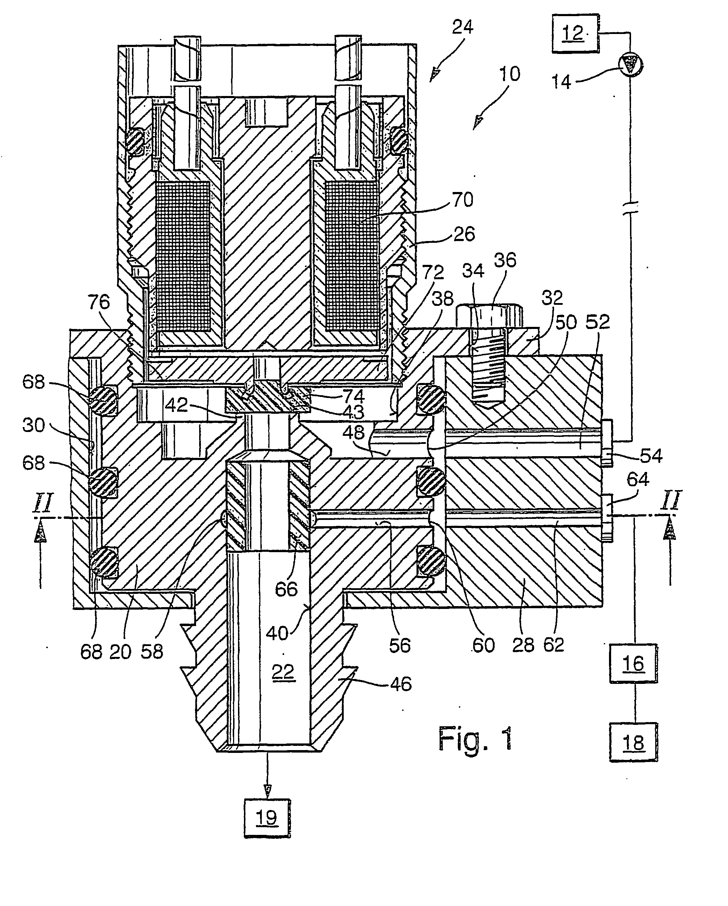

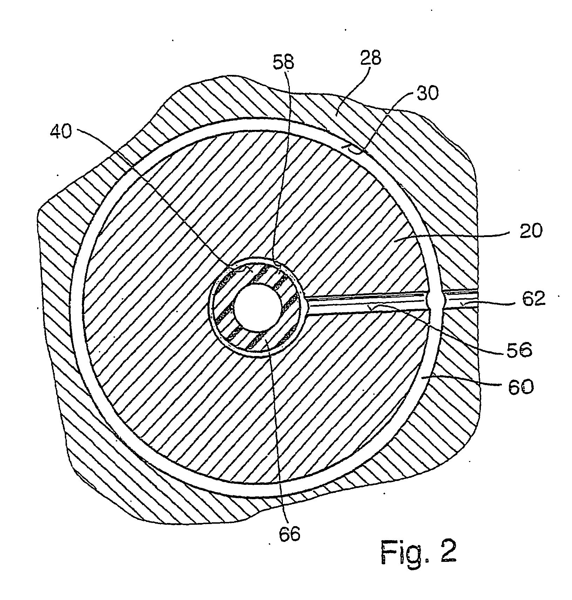

Ein Ausführungsbeispiel der Erfindung ist in der Zeichnung dargestellt und in der nachfolgenden Beschreibung näher erläutert. Es zeigen Figur 1 eine Vorrichtung zur Erzeugung eines Reduktionsmittel-Luft-Gemisches in einem Längsschnitt und Figur 2 die Vorrichtung in einem Querschnitt entlang Linie II-II in Figur 1.

### Beschreibung des Ausführungsbeispiels

In den Figuren 1 und 2 ist eine Vorrichtung 10 zur Erzeugung eines Reduktionsmittel-Luft-Gemisches dargestellt, die Bestandteil eines Systems zur Nachbehandlung von Abgas einer selbstzündenden Brennkraftmaschine ist. Das System weist einen Behälter 12 für Reduktionsmittel auf, das beispielsweise eine wässrige Harnstofflösung sein kann. Das flüssige Reduktionsmittel wird mittels einer Pumpe 14 zur Vorrichtung 10 gefördert. Das System weist außerdem einen Druckluftspeicher 16 auf, in den mittels eines Kompressors 18 Luft gefördert und Druck erzeugt wird. Aus dem Druckluftspeicher 16 wird Druckluft über eine Leitung der Vorrichtung 10 zugeführt. Das von der Vorrichtung 10 erzeugte Reduktionsmittel-Luft-Gemisch wird einem Reduktionskatalysator 19 zugeführt.

Die Vorrichtung 10 weist einen Mischraumkörper 20 auf, in dem ein nachfolgend noch näher erläuterter Mischraum 22 ausgebildet ist, und ein mit dem Mischraumkörper 20 verbundenes Dosierventil 24 mit einem Ventilkörper 26. Der Mischraumkörper 20 und der Ventilkörper 26 sind an einem gemeinsamen Trägerelement 28 befestigt. Der Mischraumkörper 20 weist eine etwa hohlzylinderförmige Grundform auf, wobei der Außendurchmesser des Mischraumkörpers 20 mehrfach gestuft ist. Der Mischraumkörper 20 ist in eine Aufnahmebohrung 30 des Trägerelements 28 eingesetzt. Der Mischraumkörper 20 weist außerhalb der Aufnahmebohrung 30 einen Flansch 32 auf, mit dem er am Trägerelement 28 zur Anlage kommt. Der Flansch 32 weist mehrere Durchgangsbohrungen 34 auf, durch die Schrauben 36 hindurchtreten, mittels denen der Mischraumkörper 20 am Trägerelement 28 befestigt ist.

Der Mischraumkörper 20 weist in seinem Endbereich, in dem der Flansch 32 ausgebildet ist, eine Bohrung 38 auf, die in ihrem äußeren Endbereich mit einem Innengewinde versehen ist, in das der Ventilkörper 26 des Dosierventils 24 eingeschraubt ist, der mit einem entsprechenden Außengewinde versehen ist. Der Mischraumkörper 20 weist eine durchgehende Bohrung 40 auf, die zu der Bohrung 38 hin in einem Stutzen 42 verläuft, der einstückig am Mischraumkörper 20 ausgebildet ist. Der Stutzen 42 mündet in der Bohrung 38, wobei der Durchmesser der Bohrung 40 sich zum Stutzen 42 hin verringert. In dem der Bohrung 38 abgewandten Bereich der Bohrung 40 ist der Mischraum 22 gebildet. Die Bohrung 40 setzt sich der Bohrung 38 abgewandt an den Mischraum 22 anschließend in einem Stutzen 46 fort, der aus der Aufnahmebohrung 30 des Trägerelements 28 herausragt. Auf den Stutzen 46 ist eine nicht dargestellte Leitung aufgesteckt, die zum Reduktionskatalysator führt.

Im Mischkörper 20 ist eine radiale Bohrung 48 ausgebildet, die die Bohrung 38 mit dem Außenmantel des Mischkörpers 20 verbindet. Der Mischkörper 20 weist an seinem Außenmantel eine umlaufende Ringnut 50 auf, in die die Bohrung 48 mündet. Im Trägerelement 28 ist ein Kanal 52 ausgebildet, der in die Aufnahmebohrung 30 im Bereich der Ringnut 50 des Mischraumkörpers 20 mündet. Am Trägerelement 28 ist ein mit dem Kanal 52 verbundener Anschluß 54 für eine vom Behälter 12 mit dem Reduktionsmittel herführende Leitung angeordnet. In die Bohrung 38 des Mischraumkörpers 20 wird somit durch die Pumpe 14, über die mit dem Anschluß 54 verbundene Leitung, den Kanal 52, die Ringnut 50 und die radiale Bohrung 48 Reduktionsmittel aus dem Behälter 12 gefördert. Die Bohrung 38 bildet einen Vorraum, in den der Stutzen 42 als Verbindung zum Mischraum 22 und die radiale Bohrung 48 als Zulauf für das Reduktionsmittel münden.

Im Mischraumkörper 20 ist eine weitere radiale Bohrung 56 ausgebildet, durch die die Bohrung 40 mit dem Außenmantel des Mischraumkörpers 20 verbunden ist. Vorzugsweise weist die Bohrung 40 eine umlaufende Ringnut 58 auf, in die die Bohrung 56 mündet. Am Außenmantel des Mischraumkörpers 20 kann ebenfalls eine umlaufende Ringnut 60 ausgebildet sein, in die die Bohrung 56 mündet. Im Trägerelement 28 ist ein Kanal 62 ausgebildet, der in die Aufnahmebohrung 30 im Bereich der Ringnut 60 des Mischraumkörpers 20 mündet. Am Trägerelement 28 ist ein mit dem Kanal 62 verbundener Anschluß 64 für eine vom Druckluftspeicher 16 herführende Leitung angeordnet. Die Bohrung 40 des Mischraumkörpers 20 ist somit über die Ringnut 58, die Bohrung 56, die Ringnut 60, den Kanal 62, den Anschluß 64 und die Leitung mit dem Druckluftspeicher 16 verbunden. In der Leitung zum Druckluftspeicher 16 kann ein Ventil angeordnet sein, durch das die Verbindung der Bohrung 40 mit dem Druckluftspeicher 16 gesteuert wird.

In die Bohrung 40 ist im Bereich der Ringnut 58 und der Bohrung 56 eine Hülse 66 eingepresst, die elastisch zusammendrückbar ist. Die Hülse 66 ist in die Bohrung 40 so weit eingeschoben, bis diese mit ihrem Ende an einer durch die Durchmesserverringerung der Bohrung 40 zum Stutzen 42 hin gebildeten Ringschulter zur Anlage kommt. Die Hülse 66 kann aus Gummi oder einem elastischen Kunststoff bestehen. In nicht zusammengedrücktem Zustand liegt die Hülse 66 dicht an der Bohrung 40 an und verschließt die Ringnut 58 und die Bohrung 56. Wenn die Verbindung der Bohrung 56 mit dem Druckluftspeicher 16 hergestellt ist, so wird die Hülse 66 durch den in der Ringnut 58 wirkenden Luftdruck zusammengedrückt und es entsteht zwischen der Hülse 66 und der Bohrung 40 ein Ringspalt, durch den Druckluft in den Mischraum 22 strömen kann.

Der Mischraumkörper 20 weist in seinem Außenmantel drei weitere Ringnuten auf, in die elastische Dichtringe 68 eingelegt sind, durch die in der Aufnahmebohrung 30 des Trägerelements 28 eine Abdichtung der Ringnuten 50,60 nach außen sowie zwischen den Ringnuten 50,60 sichergestellt wird, so daß die Reduktionsmittelzuführung und die Druckluftzuführung voneinander getrennt sind.

Wie bereits vorstehend angegeben ist der Ventilkörper 26 des Dosierventils 24 in die Bohrung 38 eingeschraubt. Das Dosierventil 24 ist als Magnetventil ausgebildet, wobei dieses einen Elektromagneten aufweist, mit einer im Ventilkörper 26 angeordneten Magnetspule 70 und einem Magnetanker 72. Der Magnetanker 72 trägt ein Ventilglied 74, das zumindest mittelbar mit dem in die Bohrung 38 ragenden Stirnende 43 des Stutzens 42 als Ventilsitz zusammenwirkt. Das Ventilglied 74 kann beispielsweise zumindest an seinem dem Stutzen 42 zugewandten Endbereich aus einem elastisch verformbaren Material wie Gummi oder Kunststoff bestehen, um eine sichere Abdichtung des Stutzens 42 zu ermöglichen. Der Magnetanker 72 mit dem Ventilglied 74 wird durch eine Schließfeder 76 zum Stutzen 42 hin beaufschlagt. Wenn die Magnetspule 70 nicht bestromt ist, so wird das Ventilglied 74 durch die Schließfeder 76 gegen das Stirnende 43 des Stutzens 42 gedrückt und verschließt dieses, so daß kein Reduktionsmittel aus der Bohrung 38 durch den Stutzen 42 in den Mischraum 22 gelangen kann. Wenn die Magnetspule 70 bestromt ist, so wird ein Magnefeld erzeugt, durch das der Magnetanker 72 angezogen und das Ventilglied 74 vom Stirnende 43 des Stutzens 42 abgehoben wird, so daß Reduktionsmittel aus der Bohrung 38 durch den Stutzen 42 in den Mischraum 22 gelangen kann.

Durch die durch den umlaufenden Ringspalt zwischen der Hülse 66 und der Bohrung 40 eintretende Druckluft erfolgt im Mischraum 22 eine gleichmäßige Zerstäubung des durch den Stutzen 42 ebenfalls in den Mischraum 22 eintretenden Reduktionsmittels und somit die Erzeugung eines Reduktionsmittel-Luft-Gemisches, das durch den Stutzen 46 austritt und durch eine an diesen angeschlossene Leitung zum Reduktionskatalysator geführt wird. Der Stutzen 46 kann an seinem Außenmantel ein sogenanntes Tannenbaumprofil aufweisen, um einen sicheren Halt und eine sichere Abdichtung der auf diesen aufgesteckten Leitung zu erreichen.

Das Dosierventil 24 wird durch eine nicht dargestellte elektrische Steuereinrichtung angesteuert, um im Mischraum 22 ein Reduktionsmittel-Luft-Gemisch mit einer für die jeweiligen Betriebsbedingungen der Brennkraftmaschine erforderlichen Konzentration an Reduktionsmittel zu erzeugen, damit der Reduktionskatalysator mit optimalem Wirkungsgrad betrieben werden kann. Wenn durch das Dosierventil 24 der Stutzen 42 wieder verschlossen ist, so kann vorgesehen sein, daß für eine bestimmte Zeitdauer noch weiterhin Druckluft dem Mischraum 22 zugeführt wird, um diesen zu trocknen und eine Ablagerung von Reduktionsmittel zu vermeiden. Die Vorrichtung weist außerdem nur ein geringes Totvolumen auf, das ständig mit Reduktionsmittel gefüllt ist, wobei das Totvolumen in der Bohrung 38 durch den Stutzen 42, den Mischraumkörper 20 und das Dosierventil 24 begrenzt ist. Dies ermöglicht eine kurze Durchströmzeit und Entleerzeit und damit eine hohe Dynamik bei einer Änderung der Durchströmmenge des Reduktionsmittels. Außerdem kann hierdurch eine zum Gefrierschutz des sich im Totvolumen befindenden Reduktionsmittels erforderliche Heizleistung gering gehalten werden.

Die Vorrichtung erfordert mit dem Mischraumkörper 20, der Hülse 66, dem Dosierventil 24, den Dichtringen 68 sowie den Befestigungsschrauben 36 und dem Trägerelement 28 nur wenige Bauteile, die außerdem einfach zu montieren sind. Das Dosierventil 24 kann als Baueinheit vormontiert werden, die in das Innengewinde der Bohrung 38 eingeschraubt wird. Bei einem Austausch des Dosierventils 24 braucht nur dieses aus der Bohrung 38 des Mischraumkörpers 20 herausgeschraubt zu werden, ohne daß hierbei weitere Bauteile der Vorrichtung entfernt werden müssen.

## Patentansprüche

1. Vorrichtung zur Erzeugung eines Reduktionsmittel-Luft-Gemisches mit einem Mischraum (22), in welchen Reduktionsmittel über eine durch ein Dosierventil (24) gesteuerte Reduktionsmittelzuführung und Luft über eine Luftzuführung einbringbar ist, **dadurch gekennzeichnet, daß** der Mischraum (22) in einem Mischraumkörper (20) ausgebildet ist, mit dem ein Ventilkörper (26) des Dosierventils (24) verbunden ist, daß der Mischraum (22) zum Dosierventil (24) hin in einen Stutzen (42) mündet und daß das Dosierventil (24) ein Ventilglied (74) aufweist, das zur Steuerung der Reduktionsmittelzuführung in den Mischraum (22) zumindest mittelbar mit dem Stirnende (43) des Stutzens (42) als Ventilsitz zusammenwirkt.

2. Vorrichtung nach Anspruch 1, **dadurch gekennzeichnet, daß** der Mischraum (22) in einer Bohrung (40) im Mischraumkörper (20) ausgebildet ist, die sich bis in den Stutzen (42) fortsetzt.

3. Vorrichtung nach Anspruch 1 oder 2, **dadurch gekennzeichnet, daß** zwischen dem Mischraumkörper (20) und dem Ventilkörper (26) ein Vorraum (38) gebildet ist, in den der Stutzen (42) und ein Zulauf (48) für das Reduktionsmittel münden.

4. Vorrichtung nach Anspruch 2 oder 3, **dadurch gekennzeichnet, daß** in die Bohrung (40) in einem dem Stutzen (42) abgewandten Bereich eine elastisch zusammendrückbare Hülse (66) eingepreßt ist und daß am Umfang der Bohrung (40) im Bereich der Hülse (66) ein Zulauf (56) für die Luft mündet, wobei die Hülse (66) durch die unter Druck zugeführte Luft zusammendrückbar ist, so daß Luft durch einen zwischen der Bohrung (40) und der Hülse (66) gebildeten Ringspalt in den Mischraum (22) gelangen kann.

5. Vorrichtung nach Anspruch 4, **dadurch gekennzeichnet, daß** sich der Durchmesser der Bohrung (40) zum Stutzen (42) hin verringert und daß die Hülse (66) bis zum Übergang der Bohrung (40) in den kleineren Durchmesser eingepreßt ist.

6. Vorrichtung nach Anspruch 4 oder 5, **dadurch gekennzeichnet, daß** die Bohrung (40) eine die Hülse (66) umgebende Ringnut (58) aufweist, in die der Zulauf (56) für die Luft mündet.

7. Vorrichtung nach einem der vorstehenden Ansprüche, **dadurch gekennzeichnet, daß** der Ventilkörper (26) in eine Gewindebohrung (38) im Mischraumkörper (20) eingeschraubt ist.

8. Vorrichtung nach einem der vorstehenden Ansprüche, **dadurch gekennzeichnet, daß** am Mischraumkörper (20) ein in den Mischraum (22) mündender Stutzen (46) angeformt ist, an den eine Leitung zum Abführen des erzeugten Reduktionsmittel-Luft-Gemisches anschließbar ist.

## Claims

1. Device for the generation of a reductant/air mixture, with a mixing space (22), into which reductant can be introduced via a reductant supply controlled by a metering valve (24) and air can be introduced via an air supply, **characterized in that** the mixing space (22) is formed in a mixing-space body (20), to which a valve body (26) of the metering valve (24) is connected, **in that** the mixing space (22) issues towards the metering valve (24) into a connection piece (42), and **in that** the metering valve (24) has a valve member (74) which, for controlling the supply of reductant into the mixing space (22), cooperates at least indirectly with the end face (43) of the connection piece (42) as a valve seat.

2. Device according to Claim 1, **characterized in that** the mixing space (22) is formed in a bore (40) in the mixing-space body (20), the said bore continuing into the connection piece (42).

3. Device according to Claim 1 or 2, **characterized in that** a pre-space (38), into which the connection piece (42) and an inflow (48) for the reductant issue, is formed between the mixing-space body (20) and the valve body (26).

4. Device according to Claim 2 or 3, **characterized in that** an elastically compressible sleeve (66) is pressed into the bore (40) in a region facing away from the connection piece (42), and **in that** an inflow (56) for the air issues on the circumference of the bore (40) in the region of the sleeve (66), the sleeve (66) being compressible by means of the air supplied under pressure so that air can pass through an annular gap, formed between the bore (40) and the sleeve (66), into the mixing space (22).

5. Device according to Claim 4, **characterized in that** the diameter of the bore (40) decreases towards the connection piece (42), and **in that** the sleeve (66) is pressed in as far as the transition of the bore (40) into the smaller diameter.

6. Device according to Claim 4 or 5, **characterized in that** the bore (40) has an annular groove (58) which surrounds the sleeve (66) and into which the inflow (56) for the air issues.

7. Device according to one of the preceding claims, **characterized in that** the valve body (26) is screwed into a threaded bore (38) in the mixing-space body (20).

8. Device according to one of the preceding claims, **characterized in that** the mixing-space body (20) has integrally formed on it a connection piece (46) which issues into the mixing space (22) and to which a line for discharging the generated reductant/air mixture can be connected.

## Revendications

1. Dispositif pour produire un mélange réducteur-air, comportant une chambre de mélange (22) dans laquelle le réducteur peut être introduit par l'intermédiaire d'une amenée de réducteur commandée par une soupape de dosage (24) et l'air par l'intermédiaire d'une amenée d'air,
**caractérisé en ce que**
la chambre de mélange (22) est formée dans un corps de chambre de mélange (20) auquel est relié un corps de soupape (26) de la soupape de dosage (24), la chambre de mélange (22) débouche dans une tubulure (42) vers la soupape de dosage (24) et la soupape de dosage (24) présente un organe de soupape (74) qui agit au moins indirectement en tant que siège de soupape conjointement avec l'extrémité frontale (43) de la tubulure (42) afin de commander l'amenée de réducteur dans la chambre de mélange (22).

2. Dispositif selon la revendication 1,
**caractérisé en ce que**
la chambre de mélange (22) est formée dans un perçage (40) qui se trouve dans le corps de chambre de mélange (20) et qui se prolonge jusque dans la tubulure (42).

3. Dispositif selon la revendication 1 ou 2,
**caractérisé en ce qu'**
entre le corps de chambre de mélange (20) et le corps de soupape (26) est formée une préchambre (38) dans laquelle débouchent la tubulure (42) et une alimentation (48) pour le réducteur.

4. Dispositif selon la revendication 2 ou 3,
**caractérisé en ce qu'**
un manchon (66) élastiquement compressible est enfoncé dans le perçage (40) dans une zone opposée à la tubulure (42) et une alimentation (56) pour l'air débouche sur le pourtour du perçage (40) dans la zone du manchon (66), le manchon (66) pouvant être comprimé par l'air acheminé sous pression de sorte que de l'air peut parvenir dans la chambre de mélange (22) par un interstice annulaire formé entre le perçage (40) et le manchon (66).

5. Dispositif selon la revendication 4,
**caractérisé en ce que**
le diamètre du perçage (40) diminue vers la tubulure (42) et le manchon (66) est enfoncé jusqu'à la transition du perçage (40) dans le diamètre plus petit.

6. Dispositif selon la revendication 4 ou 5,
**caractérisé en ce que**
le perçage (40) présente une rainure annulaire (58) qui entoure le manchon (66) et dans laquelle débouche l'alimentation (56) pour l'air.

7. Dispositif selon l'une des revendications précédentes,
**caractérisé en ce que**
le corps de soupape (26) est vissé dans un taraudage (38) situé dans le corps de chambre de mélange (20).

8. Dispositif selon l'une des revendications précédentes,
**caractérisé en ce que**
sur le corps de chambre de mélange (20) est façonnée une tubulure (46) qui débouche dans la chambre de mélange (22) et à laquelle on peut raccorder une conduite destinée à évacuer le mélange réducteur-air produit.
